Europäisches Patentamt

European Patent Office

Office européen des brevets

(11) Numéro de publication: **0 262 045**
**B1**

(12) **FASCICULE DE BREVET EUROPEEN**

(45) Date de publication du fascicule du brevet:
20.12.89

(21) Numéro de dépôt: **87402108.2**

(22) Date de dépôt: **22.09.87**

(51) Int. Cl.⁴: **F02D 21/08, F02D 41/34**

(54) Procédé de correction du temps d'injection dans un moteur à combustion interne à commande d'injection.

(30) Priorité: **23.09.86 FR 8613262**

(43) Date de publication de la demande:
**30.03.88 Bulletin 88/13**

(45) Mention de la délivrance du brevet:
**20.12.89 Bulletin 89/51**

(84) Etats contractants désignés:
**AT CH DE GB IT LI SE**

(56) Documents cités:
**GB-A- 2 042 770**
**GB-A- 2 043 778**
**US-A- 4 445 483**
**US-A- 4 598 684**

**PATENT ABSTRACTS OF JAPAN,**
**vol. 9, no. 111 (M-379)[1834], 15 mai 1985; &**
**JP-A-59 231 146 (MATSUSHITA DENKI SANGYO**
**K.K.) 25-12-1984**

(73) Titulaire: **REGIE NATIONALE DES USINES RENAULT,**
**Boîte postale 103 8-10 avenue Emile Zola,**
**F-92109 Boulogne-Billancourt(FR)**

(72) Inventeur: **Lefevre, Remi, 38, rue Henri Litolff,**
**F-92700 Colombes(FR)**
Inventeur: **Prampolini, Francis, 122, rue de Massy,**
**F-92160 Antony(FR)**

## Description

La présente invention s'applique à un moteur à combustion interne, à injection électronique, de type pression-vitesse, doté d'un dispositif de recirculation des gaz d'échappement. Ce dispositif de recirculation des gaz du type "back-pressure" comporte un conduit relié au circuit d'échappement, un clapet délivrant un débit de recirculation qui est fonction de la contre-pression à l'échappement et une électrovanne "tout ou rien" commandant l'ouverture de ce clapet. Cette partie des gaz d'échappement vient ainsi se mélanger aux gaz frais dans le circuit d'admission. Cette recirculation des gaz brûlés est utilisée pour répondre aux normes anti-pollution.

Or, l'arrivée des gaz d'échappement, qui sont inertes, dans le collecteur d'admission, tout en diminuant la quantité d'oxydes d'azote émis, diminue également la puissance, puisque pour un même volume d'air et une même pression dans le collecteur, il y a moins de gaz frais participant à la combustion. La quantité d'essence injectée étant proportionnelle à la pression dans le collecteur d'admission, on a alors pour une même pression un rapport essence-air frais plus important dans le cas où la recirculation des gaz d'échappement, on "exhaust gaz recirculation" (EGR) en vocable anglo-saxon, est en service. En effet, pour une même pression collecteur, la quantité d'air dans le collecteur est égale sans EGR à la quantité d'air frais et avec EGR à la quantité d'air frais à laquelle est ajoutée la quantité de gaz brûlés recyclés. De sorte que, le temps d'injection étant le même, le rapport entre le temps d'injection et la quantité d'air frais sans EGR est inférieur à ce même rapport avec EGR ; par conséquent, la richesse avec EGR est supérieure à la richesse sans EGR.

La mise en service de la recirculation des gaz d'échappement dans le système d'injection du type pression-vitesse, induit donc une augmentation de la richesse du mélange air-carburant. Le calculateur électronique d'injection doit alors réaliser une correction négative de la quantité d'essence à injecter.

L'invention propose un procédé de correction du temps d'injection par le calculateur électronique d'injection qui doit donc effectuer une correction négative (ou positive) de la quantité d'essence à injecter, de façon à maintenir constante la richesse même lors des mises en route ou des arrêts de la commande de recirculation des gaz d'échappement.

Pour cela, l'objet de l'invention est un procédé de correction du temps d'injection $T_i$, ou temps d'ouverture des injecteurs, dans un moteur à combustion interne à injection électronique de type pression-vitesse équipé d'un dispositif de recirculation des gaz d'échappement vers le circuit d'admission et pour lequel le temps d'injection est de la forme :

$T_i = K''K . P + T_{io}$

avec :
- P: pression dans le collecteur d'admission
- K: facteur d'échelle
- $T_{io}$: temps d'injection initial

- K": facteur multiplicatif prenant en compte certains paramètres de fonctionnement du moteur (voir US-A 4 598 684)

caractérisé en ce que la correction est du type filtre du premier ordre :

$T_i = K''K_i . P + T_{io}$

et :

$K_i = K_{i-1} + k\zeta (K_{cible} - K_{i-1})$

avec :
- $k\zeta$ : constante pour un taux donné $\zeta$ EGR de recirculation des gaz d'échappement, indépendante du régime moteur et de la pression collecteur et :
- $K_{cible}$ : valeur K du facteur d'échelle sans commande de recirculation des gaz et égale à K' avec commande d'EGR.

D'autres caractéristiques et avantages de l'invention apparaîtront dans la description qui suit, illustrée par les figures suivantes qui représentent :

- la figure 1 : les variations de la richesse au cours du temps, avec et sans commande d'EGR, pour un moteur selon l'art antérieur ;
- la figure 2 : les variations de la richesse dans les mêmes conditions, pour un moteur équipé du procédé selon l'invention ;
- les figures 3 et 4 : les variations de la richesse pour un moteur respectivement sans et avec le procédé selon l'invention, équipé de plus d'un bouclage par sonde Lambda.

Dans un moteur à injection commandée par un calculateur électronique et doté d'un dispositif de recirculation des gaz d'échappement, on a vu précédemment que la mise en service de l'EGR provoque une augmentation du temps d'injection et de la richesse du mélange. Le calculateur électronique d'injection doit donc effectuer une correction négative du temps d'injection.

En l'absence de recirculation des gaz brûlés, le temps d'ouverture des injecteurs est de la forme :

$T_i = K''K . P + T_{io}$

avec :
- P : pression dans le collecteur d'admission
- $T_{io}$ : temps d'injection initial
- K : facteur d'échelle
- K" : facteur multiplicatif de correction de température, de dynamique des injecteurs

Avec recirculation des gaz brûlés, le temps d'injection devient :

$T'_i = K''K' . P + T_{io}$

où la valeur K' du facteur d'échelle est inférieure à celle correspondant à l'absence d'EGR, K.

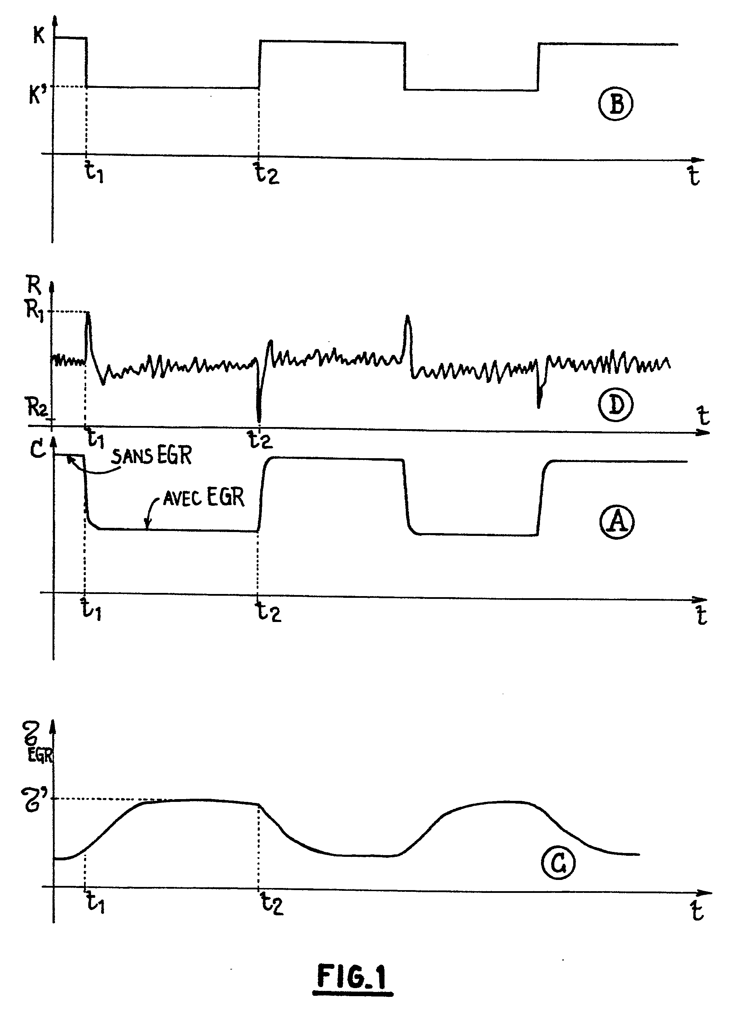

Sur la figure 1, sont représentées, en fonction du temps, les courbes suivantes :

- la courbe A : le signal de commande Cde la vanne pilotant le clapet qui autorise la recirculation des gaz brûlés vers le circuit d'admission
- la courbe B : le facteur d'échelle K
- la courbe C : le taux de recirculation des gaz $\zeta$ EGR
- la courbe D : la richesse du mélange air-carburant

L'électrovanne du type "back-pressure" fonctionne en "tout ou rien" et a la particularité de fournir un taux d'EGR $\zeta_{EGR}$ à peu près constant, quels que soient la charge et le régime du moteur. Le taux d'EGR est le rapport entre le volume des gaz brûlés remis en circulation dans le circuit d'admission, d'une part, et la somme du volume de gaz frais et du volume des gaz brûlés remis en circulation, d'autre part, c'est-à-dire le rapport entre le volume de gaz recyclés et le volume total des gaz admis.

On constate qu'à l'instant $t_1$ de mise en marche de la commande EGR, le facteur d'échelle K passe de sa valeur initiale K à une valeur K' inférieure à K pour corriger la richesse. Au même instant $t_1$, le taux d'EGR augmente de $\zeta_{EGR}$ à $\zeta'_{EGR}$ progressivement selon une courbe caractéristique de la géométrie de la vanne de recirculation des gaz brûlés qui présente un certain temps de réponse à la commande et caractéristique aussi du temps de transfert des gaz brûlés de l'échappement vers l'admission. En raison du brusque changement de valeur du facteur d'échelle K, le temps d'injection $T_i$ chute brusquement également entraînant un appauvrissement brutal $R_1$ de la richesse R à l'instant $t_1$. Une fois corrigée, la richesse revient ensuite à sa valeur initiale R lorsque le taux d'EGR $\zeta_{EGR}$ a atteint sa valeur $\zeta'_{EGR}$. De même, à l'instant $t_2$ d'arrêt de la commande d'EGR, la courbe D de richesse présente un enrichissement brutal $R_2$ dû au changement de valeur de K.

Le but de l'invention est de réaliser un changement progressif du facteur d'échelle K prenant en compte l'évolution du taux d'EGR, de façon à maintenir constante la richesse du mélange air-carburant lors des mises en route et des arrêts de la commande EGR.

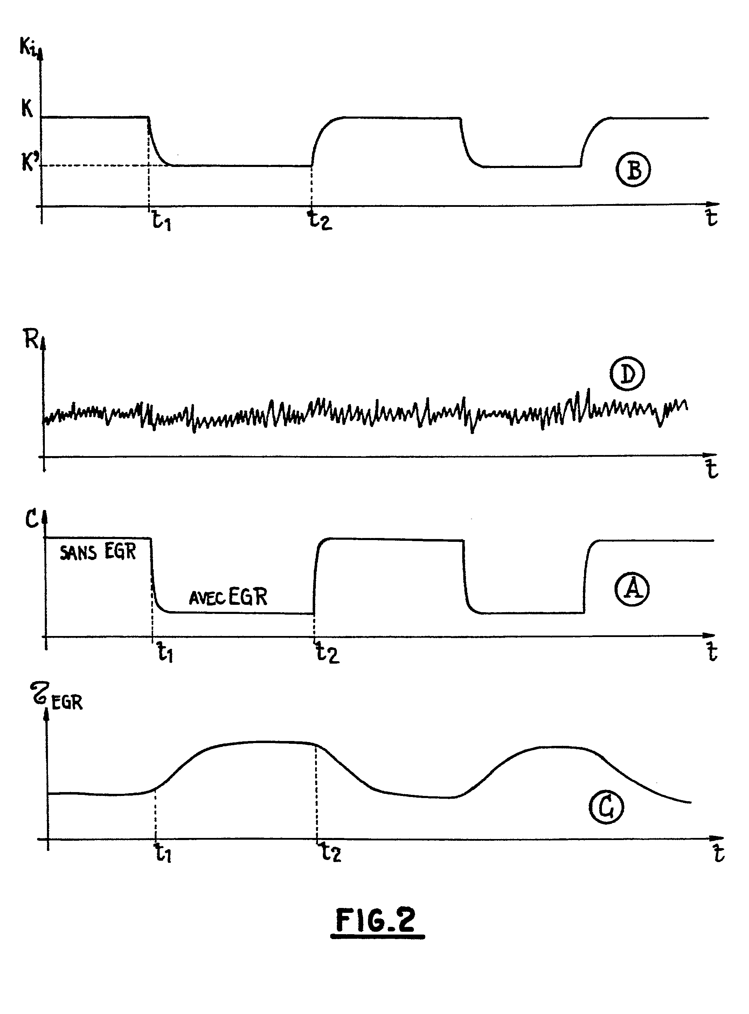

La figure 2 représente les mêmes courbes que la figure 1, le moteur étant doté du procédé selon l'invention, qui consiste à apporter une correction, du type filtre du premier ordre, au temps d'injection $T_i$ :
$$T_i = K''K_i \cdot P + t_{io}$$
avec :
$$K_i = K_{i-1} + k\zeta(K_{cible} - K_{i-1})$$
où :
- $k\zeta$ est une constante pour un taux d'EGR donné, indépendante de la pression collecteur et du régime moteur
- $K_{cible}$ est égale à la valeur initiale K du facteur d'échelle, en l'absence d'EGR, et est égale à une valeur donnée K', inférieure à K et fonction du taux d'EGR, en présence de gaz brûlés recyclés.

Ainsi, contrairement à ce qui se passait dans l'art antérieur lorsque le facteur d'échelle changeait brutalement de valeur lors des mises en marche et des arrêts de l'EGR, selon l'invention le facteur d'échelle $K_i$ varie progressivement selon une courbe du type filtre du premier ordre. Le facteur d'échelle $K_i$ comme le temps d'injection $T_i$ sont synchronisés sur le demi-tour de révolution moteur.

Sur la courbe B de la figure 2, on remarque la variation progressive du facteur d'échelle $K_i$, de la valeur K sans EGR à la valeur K' avec EGR.

Et sur la courbe D, on remarque que la richesse reste constante même lors des transitions entre absence d'EGR et présence d'EGR.

Les pics d'appauvrissement ont disparu puisque le temps d'injection n'est plus modifié brutalement mais de façon à suivre au mieux l'évolution transitoire de l'EGR.

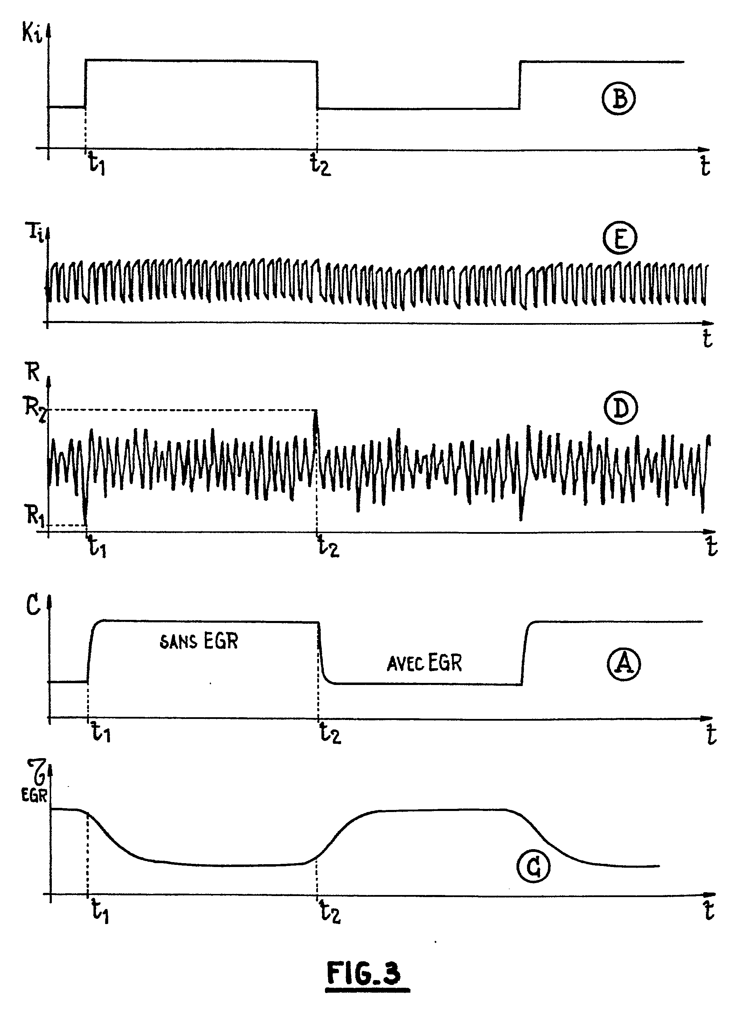

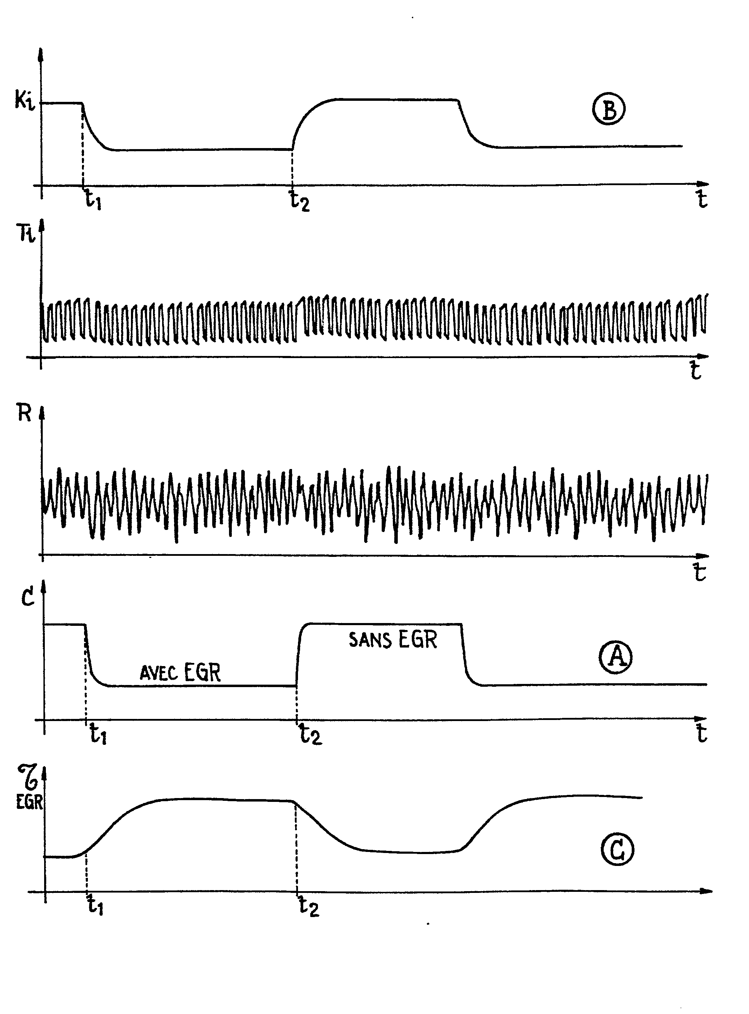

Lorsque les normes d'anti-pollution deviennent très contraignantes, on peut ajouter un pot catalytique trifonctionnel dans le circuit d'échappement. Ce type de pot catalytique n'est vraiment efficace que si le mélange initial air-essence est rigoureusement stoechiométrique, c'est-à-dire que la richesse est égale à 1. Une sonde Lambda placée dans l'échappement permet de savoir si la richesse est bien égale à 1 ou non. En fonction du signal délivré par la sonde, le calculateur électronique corrige le temps d'ouverture des injecteurs pour maintenir la richesse à la valeur 1. Cette correction du temps d'injection $T_i$ du type intégral proportionnel apparaît sur la courbe E de la figure 3. On constate que la courbe D de richesse présente des pics d'enrichissement $R_1$ et d'appauvrissement $R_2$ lors des mises en route et des arrêts de la recirculation des gaz brûlés, lorsque le moteur ne fonctionne pas avec le procédé selon l'invention. Par contre, sur la figure 4, on remarque bien que la richesse reste constante lorsque le calculateur électronique applique le procédé selon l'invention.

## Revendications

1/ Procédé de correction du temps d'injection dans un moteur à combustion interne à injection électronique du type pression-vitesse, équipé d'un dispositif de recirculation des gaz d'échappement vers le circuit d'admission, pour lequel le temps d'injection est de la forme :
$$T_i = K''K \cdot P + T_{io}$$
avec :
- P : pression dans le collecteur d'admission
- K : facteur d'échelle
- $T_{io}$ : temps d'injection initiale
- K'' : facteur multiplicatif de correction
ce procédé de correction étant destiné à maintenir la richesse du mélange air-carbutant constante, caractérisé en ce que la correction est du type filtre du premier ordre :
$$T_i = K''K_i \cdot P + T_{io}$$
et :
$$K_i = K_{i-1} + k\zeta(K_{cible} - K_{i-1})$$
avec :
- $k\zeta$ = constante pour un taux donné $\zeta_{EGR}$ de recirculation des gaz d'échappement, indépendante du régime moteur et de la pression collecteur
- $K_{cible}$ = valeur K du facteur d'échelle sans commande de recirculation des gaz
= valeur K' du facteur d'échelle avec commande de recirculation des gaz, fonction du taux $\zeta_{EGR}$ commandé

2/ Procédé selon la revendication 1, caractérisé en ce qu'il est appliqué dans un moteur équipé d'une sonde à oxygène destinée à maintenir la richesse à 1.

## Patentansprüche

1. Verfahren zur Korrektur der Einspritzdauer in einer mit einer elektronischen Einspritzung vom Druck-Geschwindigkeitstyp versehenen Brennkraftmaschine, die mit einer Vorrichtung zur Wiedereinleitung der Auspuffgase in den Einlaßkreis versehen ist und bei dem die Einspritzzeit durch die Formel bestimmt wird:

$$T_i = K''K \cdot P + T_{i0}$$

mit
- P: Druck im Ansaugstutzen
- K: Maßstabsfaktor
- $T_{i0}$ Beginn der Einspritzzeit
- K" Multiplikations-Korrekturfaktor, wobei das Korrekturverfahren dazu dient, die Anreicherung des Luft-Brennstoffgemisches konstant zu halten, dadurch gekennzeichnet, daß die Korrektur von der Art eines Filters der 1. Ordnung ist:

$$T_i = K''K_i \cdot P + T_{i0}$$

und:

$$K_i = K_{i-1} + k_\zeta (K_{cible}\ K_{i-1})$$

mit:
- $k_\zeta$ = Konstante für ein gegebenes Verhältnis $\zeta$EGR an Wiedereinleitung der Auspuffgase unabhängig vom Motorzustand und dem Druck im Ansaugstutzen
- $K_{cible}$ = Wert K des Maßstabsfaktors ohne Steuerung der Gaswiedereinleitung
= Wert K' des Maßstabsfaktors mit Steuerung der Wiedereinleitung der Gase als Funktion des gesteuerten Verhältnisses $\zeta$EGR.

2. Verfahren nach Anspruch 1, dadurch gekennzeichnet, daß es bei einem Motor angewandt wird, der mit einer Sauerstoffsonde versehen ist, um die Anreicherung bei 1 zu halten.

## Claims

1. A process for correction of the injection time in an internal combustion engine with electronic injection of the pressure-speed type, fitted with an arrangement for injection of the exhaust gases to the intake circuit, for which the injection time is of the following form:

$$T_i = K''K \cdot P + T_{i0}$$

wherein:
- P is the pressure in the intake manifold
- K is a scale factor
- $T_{i0}$ is the initial injection time and
- K" is a multiplier correction factor the correction process king intended to maintain the degree of richness of the air-fuel mixture constant, characterised in that correction is of the first-order filter type:

$$T_i = K''K_i \cdot P + T_{i0}$$

and:

$$K_i = K_{i-1} + k_\zeta (K_{cible}\ K_{i-1})$$

wherein
- $k_\zeta$ is a constant for a given exhaust gas recirculation rate $\zeta$EGR being independent of the engine condition and the manifold pressure, and

- $K_{target}$: is the value K of the scale factor without gas recirculation control, and
: is the value K' of the scale factor with gas recirculation control, in dependence on the controlled rate $\zeta$EGR.

2. A process according to claim 1 characterised in that it is applied in an engine provided with an oxygen probe intended to maintain the degree of richness at 1.

**FIG.1**

FIG.2

FIG.3

EP 0 262 045 B1